# FASCICULE DE BREVET EUROPEEN

(11) **EP 0 793 029 B1**
(45) Date de publication et mention de la délivrance du brevet: **05.11.2003**
(21) Numéro de dépôt: 97400459.0
(22) Date de dépôt: 28.02.1997
(51) Int. Cl.: F16C 1/28

(54) **Câble pour commande à distance**
Kabel für einen Bowdenzug
Cable for remote control

(30) Priorité: 29.02.1996 FR 9602547
(43) Date de publication de la demande: 03.09.1997
(73) Titulaire: Construction Brevetees D'Alfortville (C.B.A.), 94140 Alfortville (FR)
(72) Inventeur: Agostini, Jacques, 91230 Montgeron (FR)
(74) Mandataire: Busnel, Jean-Benoît

(56) Documents cités:
- EP-A- 0 189 337
- DE-A- 1 802 595
- US-A- 3 287 990
- US-A- 4 133 222
- US-A- 5 440 946

## Description

La présente invention concerne un câble pour commande à distance.

Il existe déjà des câbles de commande mécanique qui comprennent une lame centrale se déplaçant axialement en étant guidée dans une gaine par des organes de roulement, tels que des billes, entre un premier rail et un second rail diamétralement opposés et dont les extrémités respectives sont fixées sur une douille constituée d'un manchon interne emboîté dans un manchon externe avec un léger jeu permettant la rotation relative de l'un par rapport à l'autre.

Chacun desdits manchons comporte deux lumières hélicoïdales inversées dans lesquelles est engagé, de manière coulissante, au moins un élément d'accrochage solidaire de chacun des rails. Cependant dans de tels câbles, l'élément d'accrochage est constitué d'un pion cylindrique riveté ou serti sur le rail. Les surfaces respectives en contact des bords latéraux internes des lumières et du pion sont très faibles.

Dans ces conditions, les efforts de traction très importants auxquels sont soumis les rails qui assurent la tenue mécanique du câble, se traduisent par des risques de déformation incontrôlée et/ou d'arrachement du pion.

Le DE-A-1 802 595 divulgue un câble de commande du type précédent comprenant une embase allongée portant un ergot de liaison et assurant la fixation de l'élément d'accrochage. Cette embase est logée dans une cavité borgne ménagée à la surface du rail. Or, compte tenu de sa géométrie et des dimensions, cette cavité est très difficile, voire impossible à réaliser.

La présente invention a pour but de résoudre de manière satisfaisante les problèmes techniques posés par l'art antérieur.

Ce but est atteint au moyen d'un câble de commande du type précédent dont la plus grande largeur de l'ergot est supérieure à celle de l'embase de façon à délimiter une face inférieure d'appui en contact avec la face externe du rail et en ce que ladite embase est immobilisée par friction dans un orifice de verrouillage ménagé au travers du rail et ladite embase a une épaisseur au moins égale à l'épaisseur du rail au niveau de l'orifice de verrouillage.

Selon une caractéristique avantageuse, ladite embase de l'élément d'accrochage a une épaisseur supérieure à l'épaisseur du rail au niveau de l'orifice de verrouillage, de sorte que la face interne de l'embase fasse saillie vers la lame tandis que sa face externe affleure la face externe du rail.

De préférence l'embase de fixation de l'élément d'accrochage est immobilisée dans l'orifice de verrouillage, par un contact de friction avec un jeu gras du type H7 g 6 (norme iso).

La plus grande largeur de l'ergot est supérieure ou égale à celle de l'embase de façon à délimiter une face inférieure d'appui en contact avec la face externe du rail.

Dans un mode de réalisation particulier, le câble comporte, en outre, une cale d'entretoise disposée entre la face interne de l'embase dudit élément d'accrochage et la lame.

De préférence, ladite cale entretoise comporte une gorge longitudinale centrale dans laquelle est logée sans contact la face interne de l'embase dudit élément d'accrochage.

Ladite cale d'entretoise est formée d'une seule pièce entourant complètement la lame centrale ou bien de deux pièces symétriques disposées de part et d'autre de ladite lame.

Selon une autre caractéristique, l'intersection des lumières hélicoïdales inversées des manchons interne et externe définit une ouverture quadrilatère en losange correspondant sensiblement à la section de l'ergot de l'élément d'accrochage avec un jeu du type H7 F7 (norme iso).

Les lumières hélicoïdales sont inclinées par rapport aux génératrices des manchons avec un angle compris entre 30 ° et 40°.

Il est également prévu que la hauteur de l'ergot de l'élément d'accrochage à partir de l'embase est inférieure ou égale à l'épaisseur totale de la douille.

Selon une variante de réalisation, la face externe de l'embase de fixation de l'élément d'accrochage a un profil correspondant à celui de la face externe du rail.

Par ailleurs, la face externe de l'ergot de l'élément d'accrochage a un profil courbe adapté au rayon du manchon externe de façon à affleurer la face externe de ce dernier.

En outre, les extrémités longitudinales de l'embase de fixation de l'élément d'accrochage ont un profil arrondi ou droit.

Avec le câble de l'invention, en cas de traction sur le câble, tous les efforts de réaction se portent sur les rails et sur les éléments d'accrochage qui assurent la tenue mécanique.

Les éléments d'accrochage sont fixes et leurs surfaces de contact avec les manchons sont relativement importantes, ce qui permet d'obtenir une bonne résistance à l'arrachement. Par ailleurs, leur structure facilite les opérations de montage du câble.

L'invention sera mieux comprise à la lecture de la description qui va suivre, accompagnée des dessins sur lesquels :
- la figure 1 représente une vue en demi-coupe transversale du câble de l'invention ;
- la figure 2 représente une vue en coupe longitudinale du câble de l'invention ;
- les figures 3a, 3b et 3c représentent, respectivement, des vues en élévation, de dessus et de face de l'élément d'accrochage selon l'invention ; et,
- les figure 4a et 4b sont des vues extérieures partielles et de face du câble de l'invention dans des positions angulaires extrêmes des manchons.

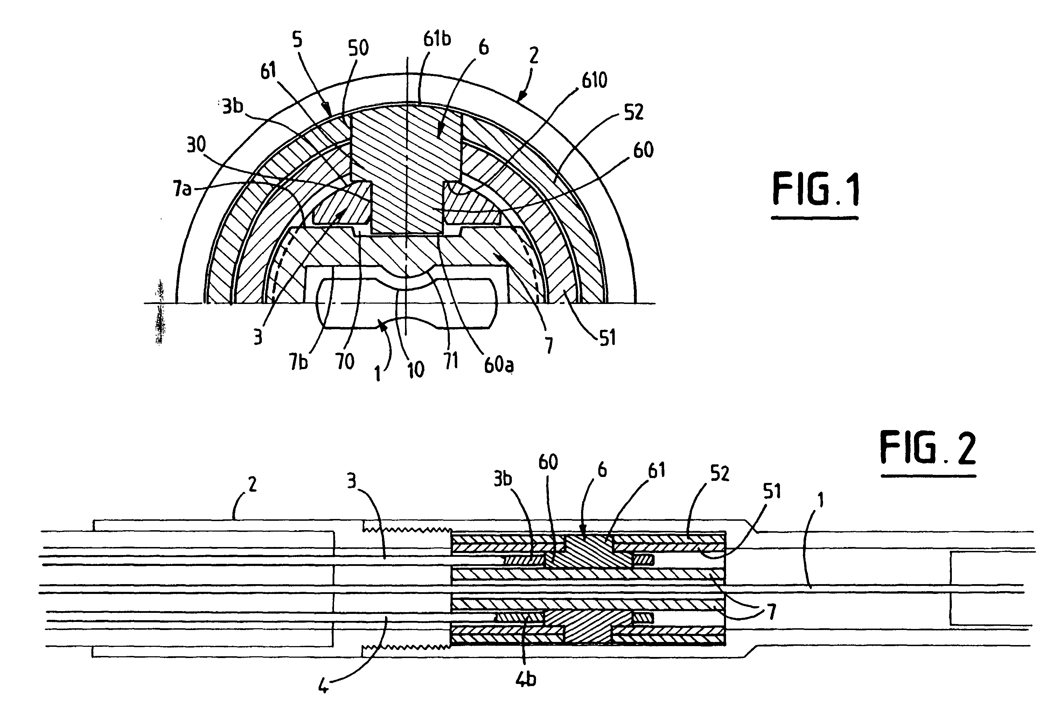

Le câble représenté en coupe sur la figure 1 au niveau de son extrémité comprend notamment une lame centrale 1 se déplaçant axialement en étant guidée dans une gaine 2 par des organes de roulement tels que des billes (non représentées).

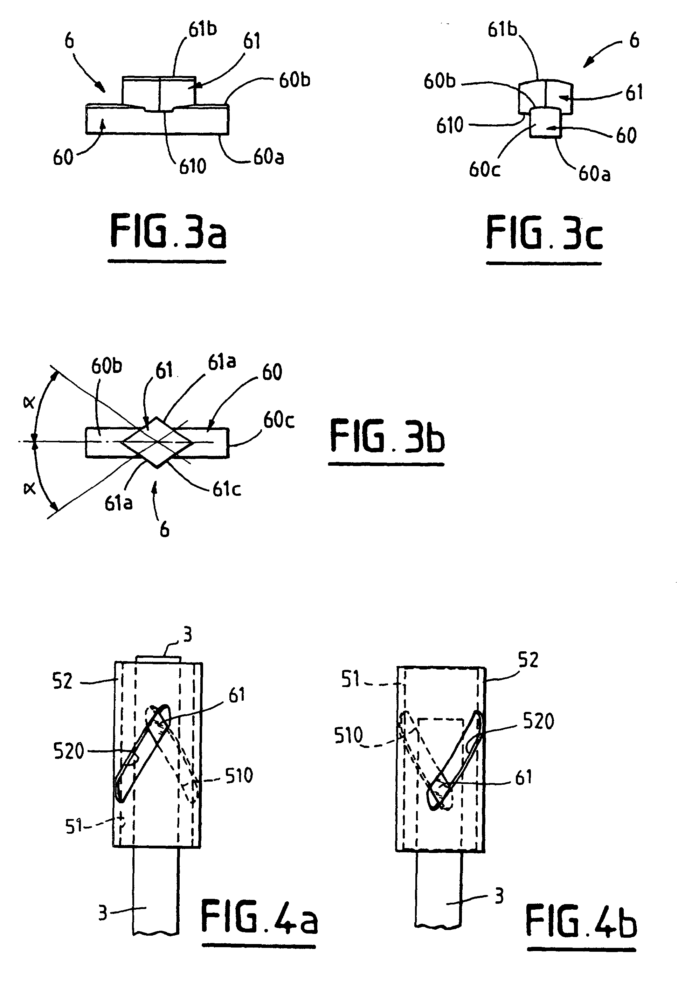

Le déplacement en translation de la lame 1 s'effectue entre un premier rail 3 et un second rail 4 diamétralement opposés et dont les extrémités longitudinales respectives sont fixées sur une douille 5. La douille 5 est constituée d'un manchon interne 51 emboîté dans un manchon externe 52 avec un léger jeu permettant la rotation relative de l'un par rapport à l'autre. Cette rotation permet d'effectuer la flexion du câble sans blocage limitatif. Chacun des manchons interne 51 et externe 52 comporte sur sa paroi latérale, une lumière hélicoïdale 510, 520 dans laquelle est engagé, de manière coulissante, au moins un élément d'accrochage 6 solidaire de chacun des rails 3, 4. Les lumières hélicoïdales 510, 520 sont inversées, l'une par rapport à l'autre, de façon à être croisées par emboîtement du manchon interne 51 dans le manchon externe 52. Les lumières hélicoïdales sont inclinées avec un angle β compris entre 30° et 40° et de préférence 35° par rapport aux génératrices des manchons cylindriques interne 51 et externe 52 (voir figures 4a et 4b).

L'élément d'accrochage 6 tel que représenté sur les figures 3a, 3b et 3c comporte une embase 60 de fixation destinée à être immobilisée dans un orifice de verrouillage 30, 40 ménagé au travers des rails 3, 4 et un ergot de liaison 61 solidaire de l'embase 60. Le verrouillage de l'embase 60 dans l'orifice 30 est obtenu, par exemple, par contact de friction entre les faces latérales de l'embase et les bords internes de l'orifice 30, 40, avec un jeu gras du type H7 g 6 norme iso. A cet effet, l'épaisseur de l'embase est supérieure ou égale à celle du rail au niveau dudit orifice et la face interne 60a de l'embase fait ainsi saillie vers l'intérieur tandis que sa face externe 60b affleure la face externe du rail 3, 4. On obtient ainsi une bonne résistance à l'arrachement de l'assemblage des rails sur les manchons. Les extrémités longitudinales 60c de l'embase 60 sont conformées avec un profil correspondant exactement à celui des extrémités longitudinales de l'orifice 30, 40. Dans le mode de réalisation représenté, les extrémités 60c sont planes et forment des bords droits mais on peut aussi les concevoir dans un profil courbe arrondi.

L'ergot de liaison 61 est destiné à être engagé dans l'ouverture 50 délimitée par l'intersection des lumières hélicoïdales inversées 510, 520 des manchons interne 51 et externe 52.

Un léger jeu subsiste entre les faces latérales 61a et 61c de l'ergot 61 et les bords internes des lumières 510, 520 des manchons interne 51 et externe 52. Ce jeu est du type H7 F7 (norme iso) et permet le guidage de l'ergot 61 dans les lumières 510, 520 formant glissières. De cette façon l'ergot 61 peut coulisser librement dans les lumières 510, 520. De plus, la hauteur de l'ergot 61 à partir de l'embase 60 est inférieure ou égale à l'épaisseur totale de la douille 5 formée par l'emboîtement du manchon interne 51 dans le manchon externe 52. Bien que l'ergot 61 soit fixé dans la lumière 510, cette dernière est réalisée avec une longueur sensiblement égale à celle de la lumière 520 de façon à permettre une grande liberté de montage en torsion.

La face externe 61b de l'ergot 61 a un profil courbe adapté au rayon du manchon externe 52 de façon à affleurer la face externe de ce dernier.

De même, la face externe 60b de l'embase 60 a un profil correspondant à celui de la face externe 3a, 4b du rail 3, 4. La translation de l'ergot 61 dans les lumières 510, 520 s'accompagne d'une rotation relative du manchon interne 51 et du manchon externe 52. Cette disposition permet d'effectuer une flexion du câble dans toutes les directions, sans provoquer de blocage interne de la commande.

Dans le mode de réalisation des figures 4a et 4b l'intersection des lumières hélicoïdales 510, 520 des manchons interne 51 et externe 52 délimite une ouverture quadrilatère 50 en losange correspondant sensiblement à la section de l'ergot 61.

Les longueurs des lumières 510, 520 sont identiques et déterminées de façon à faciliter le montage en torsion et à limiter la flexion du câble en amenant l'ergot 61 en butée dans sa course, contre les extrémités desdites lumières.

La plus grande largeur de l'ergot, c'est à dire la diagonale de la section en losange est supérieure ou égale à la largeur de l'embase 60 de façon à délimiter une face inférieure d'appui 610 en contact avec la face externe 3a, 4a du rail 3, 4 (figures 1 et 3c). L'angle α correspondant à l'inclinaison des faces latérales 61a de l'ergot 61 par rapport à l'axe longitudinal de l'embase 60 de l'élément d'accrochage 6 est de préférence compris entre 30 et 35°.

Le câble comporte en outre une cale d'entretoise 7 disposée entre la face interne 60a de l'embase 60 et la lame centrale 1. La face externe 7a de la cale 7 comporte une gorge longitudinale centrale 70 dans laquelle est logée avec ou sans contact la face interne 60a de l'embase 60.

La cale 7 est formée de préférence d'une seule pièce qui entoure complètement la lame 1 ou bien de deux pièces symétriques disposées de part et d'autre de ladite lame.

Dans tous les cas, il existe un léger jeu entre, d'une part, la face interne du rail 3,4 et la face externe de la cale 7 et, d'autre part, entre la face interne au manchon 51 et ladite cale.

La face interne 7b de la cale 7 comporte une nervure longitudinale 71 disposée en regard d'une rainure 10 correspondante ménagée sur la lame 1.

## Revendications

1. Câble pour commande à distance comprenant une lame centrale (1) se déplaçant axialement en étant guidée dans une gaine (2) par des organes de roulement entre un premier rail (3) et un second rail (4) diamétralement opposés et dont les extrémités respectives sont fixées sur une douille (5) constituée d'un manchon interne (51) emboîté dans un manchon externe (52) avec un léger jeu permettant la rotation relative de l'un par rapport à l'autre ; chacun desdits manchons (51, 52) comportant deux lumières hélicoïdales inversées (510, 520) dans lesquelles est engagé, de manière coulissante, au moins un élément d'accrochage (6) solidaire de chacun des rails (3,4), et comportant, d'une part, une embase de fixation (60) allongée et, d'autre part, un ergot de liaison (61) solidaire de ladite embase (60) engagé dans l'ouverture (50) délimitée par l'intersection des lumières hélicoïdales inversées (510, 520) des manchons interne (51) et externe (52) avec un léger jeu, dans lesquelles il est susceptible de coulisser,
**caractérisé en ce que** la plus grande largeur de l'ergot (61) est supérieure à celle de l'embase (60) de façon à délimiter une face inférieure d'appui (610) en contact avec la face externe (3b, 4b) du rail (3, 4) et **en ce que** ladite embase est immobilisée par friction dans un orifice de verrouillage (30) ménagé au travers du rail (3,4) et ladite embase a une épaisseur au moins égale à l'épaisseur du rail (3,4) au niveau de l'orifice de verrouillage (30, 40).

2. Câble selon la revendication 1, **caractérisé en ce que** ladite embase (60) de l'élément d'accrochage (6) a une épaisseur supérieure à l'épaisseur du rail (3, 4) au niveau de l'orifice de verrouillage (30, 40), de sorte que la face interne (60a) de l'embase (6) fasse saillie vers la lame (1) tandis que sa face externe (60b) affleure la face externe (3b, 4b) du rail (3,4).

3. Câble selon l'une des revendications précédentes, **caractérisé en ce qu'**il comporte, en outre, une cale d'entretoise (7) disposée entre la face interne (60a) de l'embase (60) dudit élément d'accrochage (6) et la lame (1).

4. Câble selon la revendication 3, **caractérisé en ce que** ladite cale entretoise (7) est pourvue, sur sa face externe (7a), d'une gorge longitudinale centrale (70) dans laquelle est logée sans contact la face interne (60a) de l'embase (60) et, sur sa face interne (7b), d'une nervure longitudinale (71) disposée en regard d'une rainure (10) correspondante ménagée sur la lame (1).

5. Câble selon la revendication 3 ou 4, **caractérisé en ce que** ladite cale d'entretoise (7) est formée d'une seule pièce entourant complètement la lame centrale (1) ou de deux pièces symétriques disposées de part et d'autre de ladite lame.

6. Câble selon l'une des revendication précédentes, **caractérisé en ce que** l'intersection des lumières hélicoïdales inversées (510, 520) des manchons interne (51) et externe (52) définit une ouverture (50) quadrilatère en losange correspondant sensiblement à la section de l'ergot (61) de l'élément d'accrochage (6) avec un jeu de H7 F7 (norme iso).

7. Câble selon l'une des revendications précédentes, **caractérisé en ce que** la hauteur de l'ergot (61) de l'élément d'accrochage (6) à partir de l'embase (60) est inférieure ou égale à l'épaisseur totale de la douille (5).

8. Câble selon l'une des revendications précédentes, **caractérisé en ce que** la face externe (60b) de l'embase (60) de fixation de l'élément d'accrochage (6) a un profil correspondant à celui de la face externe (3b, 4b) du rail (3, 4).

9. Câble selon l'une des revendications précédentes, **caractérisé en ce que** la face externe (61b) de l'ergot (61) de l'élément d'accrochage a un profil courbe adapté au rayon du manchon externe (52) de façon à affleurer la face externe de ce dernier.

10. Câble selon l'une des revendications précédentes, **caractérisé en ce que** les extrémités longitudinales (60c) de l'embase (60) de fixation de l'élément d'accrochage ont un profil arrondi ou droit.

11. Câble selon l'une des revendications précédentes, **caractérisé en ce que** l'embase de fixation (60) de l'élément d'accrochage (6) est immobilisée dans l'orifice de verrouillage (30, 40), par un contact de friction avec un jeu gras du type H7 g 6 (norme iso).

12. Câble selon l'une des revendications précédentes, **caractérisé en ce que** les lumières hélicoïdales (510,520) sont inclinées par rapport aux génératrices des manchons (51,52) avec un angle (β) compris 30° et 40°.

## Patentansprüche

1. Kabel für einen Bowdenzug, das eine zentrale Seele (1) umfasst, die sich axial verlagert, wobei sie in einer Hülle (2) durch Lagerorgane zwischen einer ersten Schiene (3) und einer zweiten Schiene (4) geführt wird, die diametral gegenüberliegen und deren jeweilige Enden auf einer Muffe (5) befestigt sind, gebildet aus einer inneren Hülse (51), die in eine äußere Hülse (52) mit leichtem Spiel eingesetzt ist, um die relative Rotation der einen in Hinsicht auf die andere zuzulassen; wobei jede besagte Hülse (51, 52) zwei invertierte, schraubenartig gewendelte Schlitze (510, 520) umfasst, mit denen auf verschiebbare Weise wenigstens ein Sperrelement (6) in Eingriff steht, das mit jeder der Schienen (3, 4) verbunden ist und einerseits einen langgestreckten Befestigungssockel (60) und andererseits einen an dem besagten Sockel (60) befestigten Verbindungsvorsprung (61) umfasst, der/in die Öffnung (50), die durch die Schnittfläche der invertierten, schraubenartig gewendelten Schlitze (510, 520) der inneren (51) und äußeren (52) Hülse begrenzt ist, mit leichtem Spiel eingreift, in welchen er zu gleiten imstande ist,
**dadurch gekennzeichnet,**
**dass** die größte Breite des Vorsprungs (61) größer als die des Sockels (60) ist, um eine untere Stützfläche (610) zu begrenzen, die mit der Außenfläche (3b, 4b) der Schiene (3, 4) in Kontakt ist, und dass der besagte Sockel durch Reibung in einer Verriegelungsöffnung (30) befestigt ist, die durch die Schiene (3, 4) hindurch angelegt ist, und der besagte Sockel eine Dicke hat, die wenigstens gleich der Dicke der Schiene (3, 4) auf Höhe der Verriegelungsöffnung (30, 40) ist.

2. Kabel nach Anspruch 1,
**dadurch gekennzeichnet,**
**dass** der besagte Sockel (60) des Sperrelements (6) eine Dicke hat, die größer als die Dicke der Schiene (3, 4) auf Höhe der Verriegelungsöffnung (30, 40) ist, so dass die Innenfläche (60a) des Sockels (6) in Richtung der Seele (1) hervortritt, wenn seine Außenfläche (60b) mit der Außenfläche (3b, 4b) der Schiene (3, 4) fluchtet.

3. Kabel nach einem der vorhergehenden Ansprüche,
**dadurch gekennzeichnet,**
**dass** es außerdem eine Verstrebungseinlage (7) aufweist, die zwischen der Innenfläche (60a) des Sockels (60) des besagten Sperrelements (6) und der Seele (1) angeordnet ist.

4. Kabel nach Anspruch 3,
**dadurch gekennzeichnet,**
**dass** die besagte Verstrebungseinlage (7) auf ihrer Außenseite (7a) mit einem zentralen longitudinalen Einschnitt (70), in dem die Innenfläche (60a) des Sockels (60) ohne Kontakt eingefügt ist, und auf ihrer Innenseite (7b) mit einer longitudinalen Rippe (71) versehen ist, die in Hinblick auf eine entsprechende in der Seele (1) angelegte Rille (10) angeordnet ist.

5. Kabel nach Anspruch 3 oder 4,
**dadurch gekennzeichnet,**
**dass** die besagte Verstrebungseinlage (7) aus einem einzigen Stück ausgebildet ist, das die zentrale Seele (1) vollständig umgibt, oder aus zwei symmetrischen Stücken, die auf beiden Seiten der besagten Seele angeordnet sind.

6. Kabel nach einem der vorhergehenden Ansprüche,
**dadurch gekennzeichnet,**
**dass** die Schnittfläche der invertierten, schraubenartig gewendelten Schlitze (510, 520) der inneren (51) und äußeren (52) Hülse eine viereckige, rautenförmige Öffnung (50) definiert, die im Wesentlichen dem Querschnitt des Vorsprungs (61) des Sperrelements (6) mit einem Spiel von H7 F7 (Iso-Norm) entspricht.

7. Kabel nach einem der vorhergehenden Ansprüche,
**dadurch gekennzeichnet,**
**dass** die Höhe des Vorsprungs (61) des Sperrelements (6) ausgehend von dem Sockel (60) kleiner oder gleich der Gesamtdicke der Muffe (5) ist.

8. Kabel nach einem der vorhergehenden Ansprüche,
**dadurch gekennzeichnet,**
**dass** die Außenfläche (60b) des Befestigungssockels (60) des Sperrelements (6) ein Profil besitzt, das dem der Außenfläche (3b, 4b) der Schiene (3, 4) entspricht.

9. Kabel nach einem der vorhergehenden Ansprüche,
**dadurch gekennzeichnet,**
**dass** die Außenfläche (61 b) des Vorsprungs (61) des Sperrelements ein gekrümmtes Profil besitzt, das an den Radius der äußeren Hülse (52) angepasst ist, um mit der Außenfläche dieser letzteren zu fluchten.

10. Kabel nach einem der vorhergehenden Ansprüche, 1
**dadurch gekennzeichnet,**
**dass** die longitudinalen Enden (60c) des Befestigungssockels (60) des Sperrelements ein abgerundetes oder rechtwinkliges Profil besitzen.

11. Kabel nach einem der vorhergehenden Ansprüche,
**dadurch gekennzeichnet,**
**dass** der Befestigungssockel (60) des Sperrelements (6) durch einen Reibungskontakt mit einem großzügigen Spiel des Typs H7 g 6 (Iso-Norm) befestigt in einer Verriegelungsöffnung (30, 40) ist.

12. Kabel nach einem der vorhergehenden Ansprüche,
**dadurch gekennzeichnet,**
**dass** die schraubenartig gewendelten Schlitze (510, 520) in Bezug auf die Mantellinien der Hülsen (51, 52) mit einem Winkel (β) zwischen 30° und 40° geneigt sind.

## Claims

1. Remote control cable comprising a central strip (1) which is displaced axially guided in a sheath (2) by bearing organs between a first rail (3) and a second diametrically opposed rail (4) the respective ends of which are fixed to a tubular casing 5 formed of an inner sleeve (51) inserted in an cuter sleeve (52) with a slight clearance permitting rotation of the one relative to the other; each of the said sleeves (51, 52) including two reverse helical apertures (510, 520) in which is slidingly engaged at least one catching element (6) firmly attached to each of the rails (3, 4) and including, on the one hand, an elongate fixing base (60) and, on the other, a connecting lug (61) firmly attached to the said base (60) engaged in the opening (50) defined by the intersection of the reverse helical apertures (510, 520) in the inner (51) and outer (52) sleeves with a slight clearance, in which it can slide,
**characterised by** the fact that the larger width of the lug (61) is greater than that of the base (60) so as to define a lower bearing face (610) in contact with the outer face (3b, 4b) of the rail (3, 4) and by the fact that the said base is immobilised by friction in a locking orifice (30) formed through the rail (3, 4) and the said base has a thickness at least equal to the thickness of the rail (3, 4) at the level of the locking orifice (30, 40).

2. Cable as described in claim 1, **characterised by** the fact that the said base (60) of the catching element (6) has a thickness greater than the thickness of the rail (3, 4) at the level of the locking orifice (30, 40), so that the inner face (60a) of the base (6) projects towards the strip (1) while its outer face (60b) is level with the outer face (3b, 4b) of the rail (3, 4).

3. Cable as described in one of the preceding claims, **characterised by** the fact that it includes, in addition, a bridging block (7) arranged between the inner face (60a) of the base 60 of the said catching element (6) and the strip (1).

4. Cable as described in claim 3, **characterised by** the fact that the said bridging block (7) is provided, on its outer face (7a) with a longitudinal central groove (70) in which is housed without contact the inner face (60a) of the base (60) and, on its outer face (7b) with a longitudinal rib (71) arranged opposite a corresponding groove (10) formed in the strip (1).

5. Cable as described in claim 3 or 4, **characterised by** the fact that the said bridging block (7) is formed in one piece completely surrounding the central strip (1) or in two symmetrical pieces arranged on either side of the said strip.

6. Cable as described in one of the preceding claims, **characterised by** the fact that the intersection of the reverse helical apertures (510, 520) in the inner (51) and outer (52) sleeves defines a quadrilateral diamond-shaped opening (50) substantially corresponding to the cross-section of the lug (61) of the catching element (6) with a clearance of H7F7 (iso standard).

7. Cable as described in one of the preceding claims, **characterised by** the fact that the height of the lug (61) of the catching element (6) from the base (60) is less than or equal to the total thickness of the tubular casing (5).

8. Cable as described in one of the preceding claims, **characterised by** the fact that the outer face (60b) of the fixing base (60) of the catching element (6) has a shape corresponding to that of the outer face (3b, 4b) of the rail (3, 4).

9. Cable as described in one of the preceding claims, **characterised by** the fact that the outer face (61b) of the lug (61) of the catching element has a curved shape matching the radius of the outer sleeve (52) so as to be level with the outer face of the latter.

10. Cable as described in one of the preceding claims, **characterised by** the fact that the longitudinal ends (60c) of the fixing base (60) of the catching element have a rounded or straight shape.

11. Cable as described in one of the preceding claims, **characterised by** the fact that the fixing base (60) of the catching element (6) is immobilised in the locking; orifice (30, 40) by frictional contact with a broad clearance of type H7 g 6 (iso standard).

12. Cable as described in one of the preceding claims, **characterised by** the fact that the helical apertures (510, 520) are inclined relative to the generatrices of the sleeves (51,52) at an angle (β) of between 30° and 40°.
